# EUROPEAN PATENT SPECIFICATION

(11) **EP 3 351 096 B1**
(45) Date of publication and mention of the grant of the patent: **13.05.2020**
(21) Application number: 15903789.4
(22) Date of filing: 14.09.2015
(51) Int. Cl.: A01K 71/00, A01K 75/04, D07B 1/20

(54) **FISHING TOOL FLOATING ROPE**
SCHWIMMSEIL EINES ANGELWERKZEUGS
FILIN FLOTTANT D'OUTIL DE PÊCHE

(43) Date of publication of application: 25.07.2018
(73) Proprietor: Hsieh Fou Fishing Tackles Industry Co., Ltd., Kaohsiung City 806 (TW)
(72) Inventor: YEH, Jui-Wen, Kaohsiung City 806 (TW); YEH, Yu-Hao, Kaohsiung City 806 (TW)
(74) Representative: Spengler, Robert
(86) International application number: PCT/CN2015/089514
(87) International publication number: WO 2017/045098

(56) References cited:
- CN-U- 87 216 606
- CN-U- 201 546 105
- CN-Y- 2 338 975
- CN-Y- 201 015 368
- KR-A- 20130 004 220
- KR-A- 20140 053 427
- TW-A- 200 601 963
- TW-U- M 256 071

## Description

### BACKGROUND OF THE INVENTION

### 1. Field of the Invention

The present invention relates to a fishing tool, and more particularly to a fishing tool floating rope.

### 2. Description of the Related Art

A conventional fishing net device comprises an upper wearing gear and a lower wearing gear, which are respectively provided with an upper net rope and a lower net rope for stringing. Floating balls (or called floats) are knotted on the upper net rope at determined intervals, while plummets or counterweight objects (called sinkers) are knotted on the lower net rope, so that the fishing net can evenly and vertically spread in the water due to the buoyancy of the upper net rope and the weights of lower net rope. However, the conventional fishing net device is to manually and respectively knot the floating balls (or called floats) and plummets or counterweight objects (called sinkers) on the upper net rope and the lower net rope by means of fixing line, so the floating balls (or called floats) and plummets or counterweight objects (called sinkers) are easily loosen to form an bump, which is easy to entangle in the fishing net and narrow the spreading of fishing net. Besides, the bump will also entangle in and damage the fishing net during dragging operation.

Please refer to Taiwan Utility Model Patent Publication No. M256071, "Improving Structure of Fishing Net", which comprises a net main body, a floating rope set and a counterweight rope set. The floating rope set combines a plurality of upper wearing gears configured on the net main body, and the counterweight rope set combines
a plurality of lower wearing gears configured on the net main body. The counterweight rope set includes a net rope and a woven net rope, and a plurality of counterweight bodies are covered inside the woven net rope at intervals and in sections. Between two adjacent counterweight bodies, the woven net rope is knotted with the net rope, so that it can prevent the counterweight rope set from improper entanglement during casting or dragging operation. The floating rope set is provided with a first net rope and a second net rope, wherein the first net rope is positioned through the upper wearing gears on the net main body to combine with the upper edge of the net main body. A plurality of floating balls is exposed to combine with the second net rope. However, because the floating balls are exposed, it is not easy to drag or remove the net, and will increase the man power and cost.

In a prior art fishing tool floating rope, a plurality of floats are covered inside a woven net rope. The current process is to manually plug the floats one by one which is time-consuming and cannot control the intervals between the floats. For quickly plugging the floats, two ends of the floats are convergent, and when using the fishing tool, two ends of the floats are exposed which will easily damage the structure of net rope.

In a prior art automated manufacturing method of fishing tool floating rope, a special floating rope woven device is used to throw a plurality of floats into the center of a reversely interlaced downward net rope by time sequence, so that the woven net rope can cover the floats. However, this process has to monitor the throwing time and weaving speed, so it is hard to control the intervals between floats, and the special device is expensive but with a limited utilization.

Document TW 200 601 963 A discloses a fishing tool floating rope comprising a module stringing core configured to string a plurality of floating elements at equal intervals. Each of the floating elements has a main body having two ends connected each to a neck portion and a terminal portion, wherein the neck portion has a radial cross-sectional size less than radial cross-sectional sizes of the main body and the terminal portion. A covering woven rope is interlaced to cover the module stringing core.

### SUMMARY OF EMBODIMENTS OF THE INVENTION

Therefore, an objective of an embodiment of the present invention is to provide a fishing tool floating rope. Through the quickly connector, the floating element and the modular snap fastener can be quickly assembled to form a string of the module stringing core serving as a center line of circular knitting machine to produce the fishing tool floating rope, so that the automated production of covering the floating elements at equal intervals can be achieved during the weaving process of the covering rope.

Another objective of an embodiment of the present invention is to provide a fishing tool floating rope, by which a plurality of floating elements can be automatically covered insides the floating rope at equal intervals. Besides, a conventional circular knitting machine can be used to produce the fishing tool floating rope, and the intervals between floating elements can be adjusted and controlled by determined modular snap fastener, so it is not necessary to have a special floating rope woven device.

The object and solution is achieved by a fishing tool floating rope according to the invention disclosed in claim 1, comprising a module stringing core and a covering woven rope. The module stringing core is configured to string a plurality of floating elements at equal intervals. Each of the floating elements has a main body having two ends connected jointly to a neck portion and a terminal portion. The neck portion has a radial cross-sectional size less than the radial cross-sectional sizes of the main body and the terminal portion. The covering woven rope is interlaced to cover the module stringing core.

In the aforementioned fishing tool floating rope, the module stringing core further comprises a plurality of modular snap fasteners, and each modular snap fastener comprises a bendable line and a plurality of hollow snap fastening members connected to two ends of the bendable line for housing the terminal portions.

Each of the hollow snap fastening members is comparatively distant from the center of corresponding modular snap fasteners and has a U-shaped gap snap fastening slot configured to fit the neck portion. Therefore, the floating elements can string at equal intervals.

In the aforementioned fishing tool floating rope, the hollow snap fastening members is semi-covered, and protrusions on the two sides of the U-shaped gap snap fastening slot are flexible for clamping, so that the U-shaped gap snap fastening slot can easily fit the corresponding neck portion.

In the aforementioned fishing tool floating rope, the shape of the terminal portion is spherical, so when the floating element rotates, the terminal portion will not separate from the corresponding hollow snap fastening member.

In the aforementioned fishing tool floating rope, the radial cross-sectional size of the terminal portion is particularly less than the radial cross-sectional size of the main body, so that the radial cross-sectional size of hollow snap fastening members will not protrude over the radial cross-sectional size of the main body. Therefore, the terminal portion will not easily separate from the hollow snap fastening member.

In the aforementioned fishing tool floating rope, preferably, the cross section of the hollow snap fastening members is semi-cut and is a tapered edge leaning toward the opening of the U-shaped gap snap fastening slot for helping the U-shaped gap snap fastening slot fit the corresponding neck portion.

In the aforementioned fishing tool floating rope, the module stringing core further comprises a line configured to string a plurality of floating elements, so that the floating elements can sting at equal intervals with less cost.

In the aforementioned fishing tool floating rope, the line can string the terminal portions heading the same stringing direction of the floating elements, so that the floating elements can quickly string at equal intervals with less cost.

In the aforementioned fishing tool floating rope, the shape of the main body can be cylindrical, so that the floating element can have a better volume for operation, and when the floating element rotates, it will not damage the covering woven rope.

In the aforementioned fishing tool floating rope, the shape of the main body can be oval, so that the floating elements can help covering woven rope for its covering operation.

In the aforementioned fishing tool floating rope, the module stringing core further comprises a line configured to string a plurality of floating elements.

In the aforementioned fishing tool floating rope, the main body has two ends connected jointly to a terminal portion, and the terminal portion has a radial cross-sectional size less than the radial cross-sectional size of the main body. The line strings the terminal portions of the floating elements on the same side.

In the aforementioned fishing tool floating rope, the main body has two ends connected jointly to a terminal portion, and the terminal portion has a radial cross-sectional size less than the radial cross-sectional size of the main body, a convergent curved surface are formed between the main body and the terminal portion.

In the aforementioned fishing tool floating rope, the main body has two ends connected jointly to a terminal portion, and the terminal portion has a radial cross-sectional size less than the radial cross-sectional size of the main body, a convergent tapered surface are formed between the main body and the terminal portion.

In the aforementioned fishing tool floating rope, the hollow snap fastening members is droplet-shaped.

In the aforementioned fishing tool floating rope, at least a main body of the floating elements is a floating chain, which is strung by a plurality of main body chain units.

In the aforementioned fishing tool floating rope, the length of the bendable line is larger than the interval between the adjacent main body chain units.

According to the aforementioned methods, an advantage of an embodiment of the invention is that through a creative combination of module stringing core, the floating element and the modular snap fastener can be quickly assembled by the quickly connector to form a string of the module stringing core serving as a center line of circular knitting machine to produce the fishing tool floating rope, so that the automated production of covering the floating element at equal intervals can be achieved during the weaving process of the covering rope. Besides, a plurality of floating elements can be automatically covered insides the floating rope at equal intervals.

### BRIEF DESCRIPTION OF THE DRAWINGS

FIG 1 is a partial exploded view of a fishing tool floating rope in a first preferred embodiment according to the present invention;
FIG 2 is a partial exploded view of the module stringing core in the first preferred embodiment;
FIG 3A to 3C are exploded view, cross-sectional side view and front view of the floating elements in the first preferred embodiment;
FIG. 4A to 4C are exploded view, cross-sectional side view and front view of the modular snap fastener in the first preferred embodiment;
FIG. 5 is a drawing depicting that a fishing tool floating rope assembles a fishing net in the first preferred embodiment;
FIG. 6 is a partial exploded view of a fishing tool floating rope in a second preferred embodiment according to the present invention;
FIG. 7 is a partial exploded view of the module stringing core in the second preferred embodiment;
FIG. 8A to 8C are exploded view, cross-sectional side view and front view of the floating element in the second preferred embodiment;
FIG. 9 is a partial exploded view of the module stringing core of another fishing tool floating rope in a third preferred embodiment according to the present invention;
FIG. 10 is a partial exploded view of the module stringing core of another fishing tool floating rope in a fourth preferred embodiment according to the present invention;
FIG. 11 is a partial exploded view of the module stringing core of another fishing tool floating rope in a fifth preferred embodiment according to the present invention; and
FIG. 12 is a partial exploded view depicting that another fishing tool floating rope axially cuts the covering woven rope in a sixth preferred embodiment according to the present invention.

### DETAILED DESCRIPTION OF THE PREFERRED EMBODIMENTS

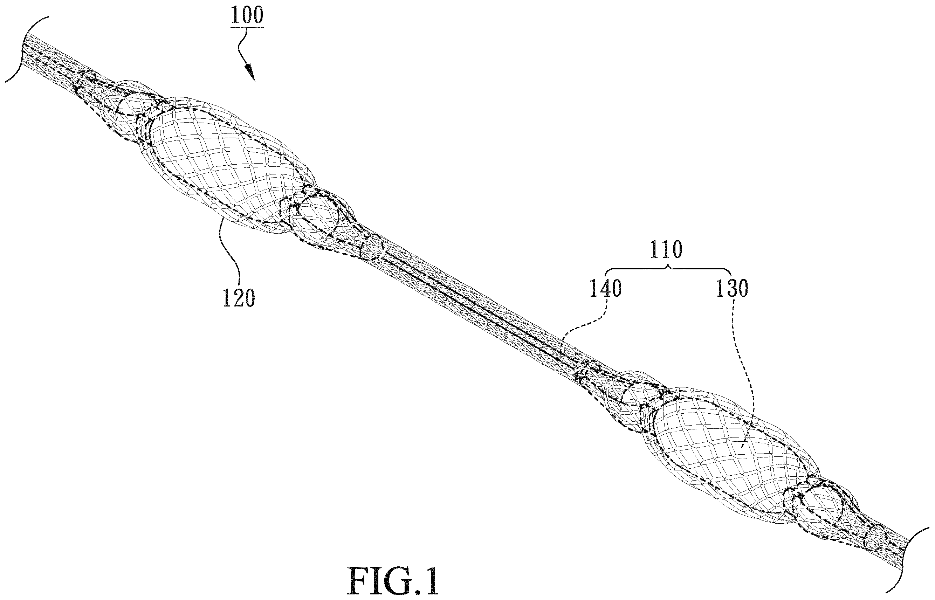

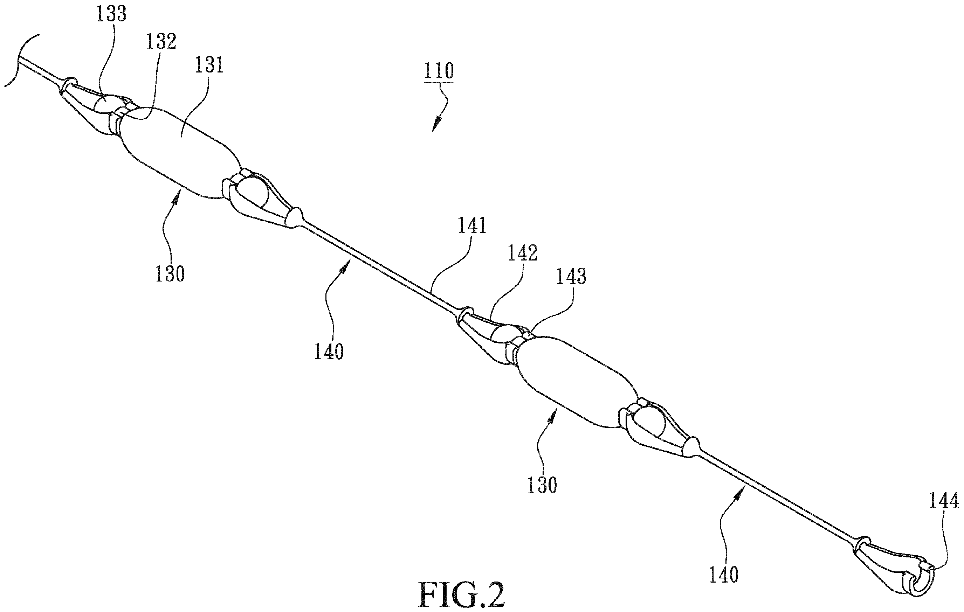

Specific structural and functional details disclosed herein will become apparent from the following description of the preferred embodiment of the present invention taken in conjunction with the accompanying drawings, which provides better understanding to a person having ordinary skill in the art but shall not be construed as limiting the invention. With reference to FIG. 1, a partial exploded view of a fishing tool floating rope 100 in the first preferred embodiment according to the present invention is depicted. A fishing tool floating rope 100 comprises a module stringing core 110 and a covering woven rope 120. The covering woven rope 120 is interlaced to cover the module stringing core 110. With reference to FIG. 2, a partial exploded view of the module stringing core 110 is depicted.

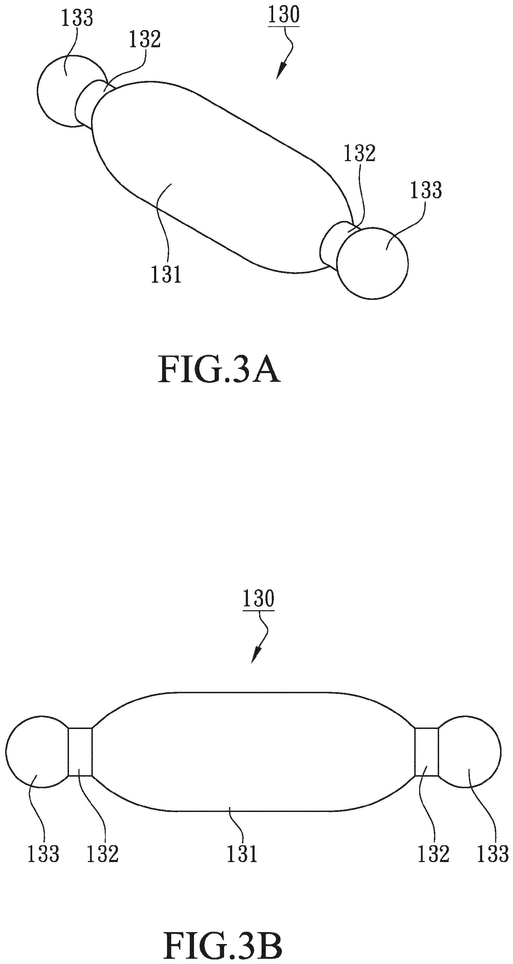

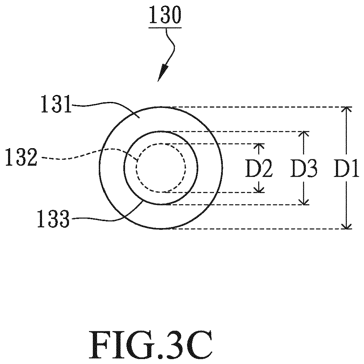

With reference to FIG. 2, the module stringing core 110 is configured to string a plurality of floating elements 130 at equal intervals. With reference to FIG. 3A, 3B and 3C, exploded view, cross-sectional side view and front view of the floating elements 130 are depicted. Each of the floating elements 130 has a main body 131 having two ends connected jointly to a neck portion 132 and a terminal portion 133. The neck portion 132 has a radial cross-sectional size D2 less than the radial cross-sectional size D1 of the main body and the radial cross-sectional size D3 of the terminal portion 133 (shown in the FIG. 3C). By different radial cross-sectional size, the rotation of the floating element 130 in the covering woven rope 120 can be reduced. The axial direction means the direction between two terminal portions 133 on the same floating element 130, and the radial direction means the direction or panel parallel to the axial direction. The radial cross-sectional size named herein means that the largest size is obtained based on an object parallel to the axial direction. Different radial cross-sectional sizes of the sinking elements 130 is shown in the FIG. 3C, the front view of the floating elements. Furthermore, the module stringing core 110 is a bendable strung object used for rolling and storing. The length of module stringing core 110 is adjustable on demand to meet the requirement of different fishing tool floating rope. The floating element 130 can be made from foam material which has density less than water or seawater, so that it can float on the water. The unit length of main body 131 can be larger than the unit lengths of the neck portion 132 and the terminal portion 133. With reference to FIG. 3A and 3B, the shape of main body is cylindrical, so that the floating element 130 can have a better volume for operation, and when the floating element 130 rotates, it will not damage the covering woven rope 120.

With reference to FIG. 1, the covering woven rope 120 can cover the floating elements 130 at equal intervals. The covering woven rope 120 can be made from water-proof plastics, and can be interlaced with multiple strands by the circular knitting machine. The way that the covering woven rope 120 covers the module stringing core 110 is interlacing. The so called "interlacing" means that the module stringing cores 110 string together to be the core line of the covering woven rope 120. The multiple thin strands are interlaced around the module stringing core 110 to produce the covering woven rope 120, so that the floating elements 130 can have better covering and automated knitting operation. The definition of "interlacing" doesn't include the operation which is like to produce the covering woven rope 120 first which is plugged into the module stringing core 110 (or the sinking elements 130) later.

With reference to FIG. 2, in the preferred embodiment, the module stringing core 110 further comprises a plurality of modular snap fastener 140. With reference to 4A, 4B and 4C, exploded view, cross-sectional side view and front view of the modular snap fastener 140 are depicted. Each modular snap fastener 140 comprises a bendable line 141 and a plurality of hollow snap fastening members 142 connected to two ends of the bendable line 141 for housing the terminal portions 133. Each of the hollow snap fastening members 142 is comparatively distant from the center of corresponding modular snap fasteners 140 and has a U-shaped gap snap fastening slot 143 configured to fit the neck portion 132. Therefore, the floating elements 130 can string at equal intervals. The bendable line 141 can bend following with the movement of covering woven rope 120 to maintain the intervals between the floating elements 130. The modular snap fastener 140 can be made from water-proof plastics. The extension force of the bendable line 141 is larger than the weaving extension of the covering woven rope 120. The shape of the hollow snap fastening members 142 can house and fit the terminal portion 133 with shape like a pear. The cross-section size of the U-shaped gap snap fastening slot 143 can be less than the radial cross-section size D1 of the main body 131 and the radial cross-section size D3 of the terminal portion 133, so the U-shaped gap snap fastening slot 143 can fit the neck portion 132. With reference to FIG. 2, depending on the difference of the determined modular snap fastener 140, the unit length of the bendable line body 141 is larger than the unit length of the floating element 130, and it can also equal to or less than the unit length of the floating element 130, so that the equal intervals between the floating elements 130 can be controlled.

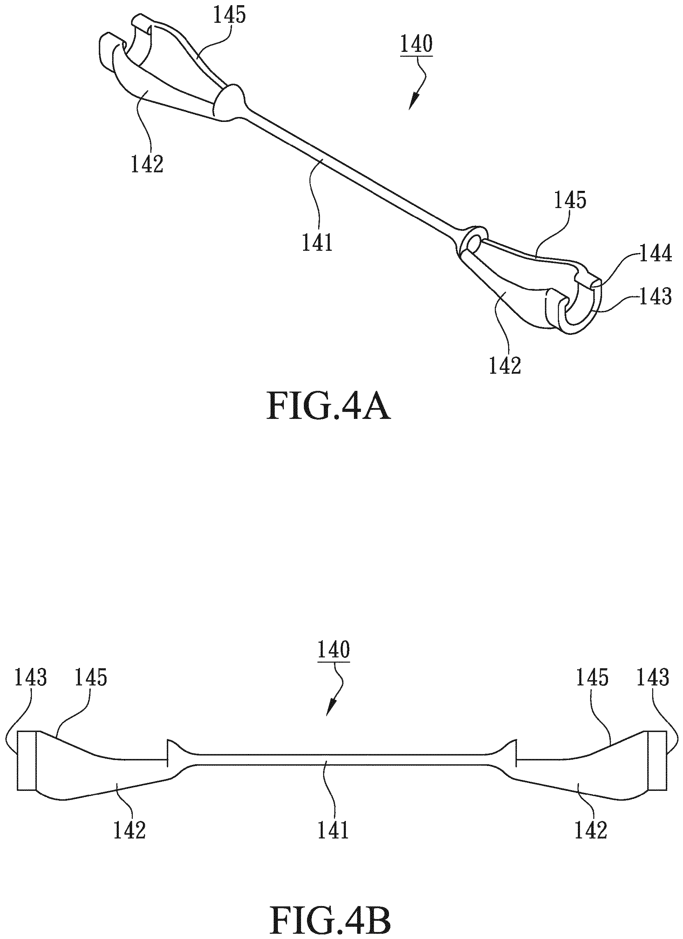

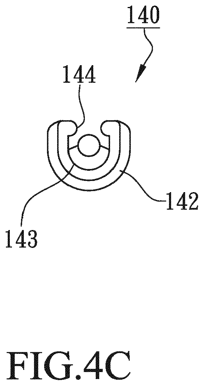

With reference to FIG. 4A to 4C, the the hollow snap fastening members 142 is semi-covered, and protrusions 144 on the two sides of the U-shaped gap snap fastening slot 143 are flexible for clamping, so that the U-shaped gap snap fastening slot 143 can easily fit the corresponding neck portion 132. The two opposite protrusions 144 is less than the radial cross-section size of the neck portion 132. The protrusions 144 can help the modular snap fastener 140 fit the neck portion 132. The semi-covered hollow snap fastening members 142 helps the modular snap fastener 140 combine with or separate from the floating element 130. Preferably, the cross section of the hollow snap fastening members 142 is semi-cut and is a tapered edge 145 (shown in FIG. 4B) leaning toward the opening of the U-shaped gap snap fastening slot 143 for helping the U-shaped gap snap fastening slot 143 fit the corresponding neck portion 132.

With reference to FIG. 3A and 3B, preferably, the shape of the terminal portion 133 is spherical, so when the floating element 130 rotates, the terminal portion 133 will not separate from the corresponding hollow snap fastening member 142, and it can reduce the damage of the covering woven rope 120. With reference to FIG. 3C, the radial cross-section size D3 of terminal portion 133 is less than the radial cross-section size D1 of main body 131, so that the terminal portion 133 will not easily separate from the hollow snap fastening member 142.

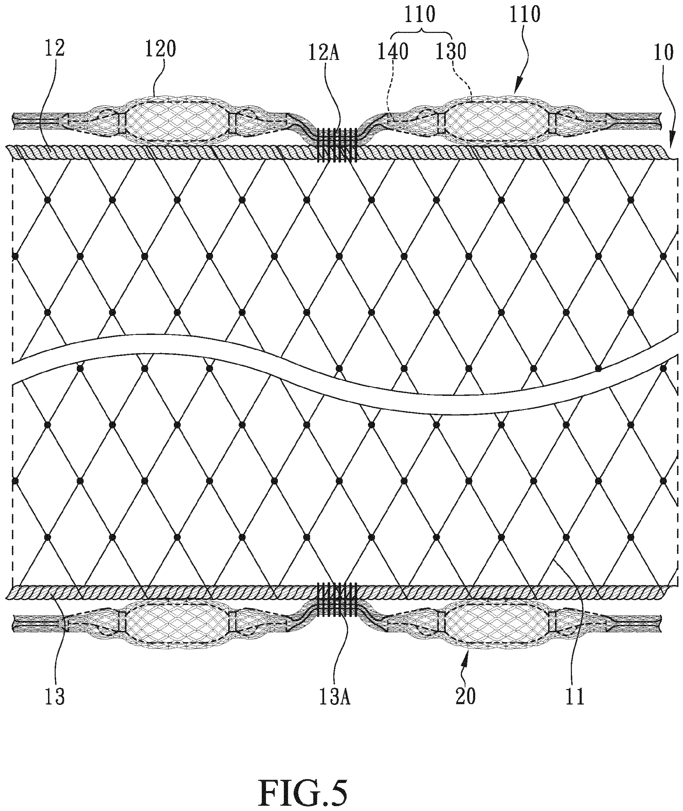

With reference to FIG. 5, a drawing depicting that a fishing tool floating rope 100 assembles a fishing net. The fishing net 10 comprise a net body composed of a plurality of net lines 11, an upper net rope 12 and a lower net rope 13, wherein the upper net rope 12 is positioned on the upper edge of the net body, and the lower net rope 13 is positioned on the lower edge of the net body. The fishing tool floating rope 100 is combined with the upper net rope 12 by a plurality of upper net rope stringing areas 12A. A fishing tool sinking rope 20 is combined with the lower net rope 13 by a plurality of lower net rope stringing areas 13A. When the fishing net is cast on the ocean, the net body composed of the net lines 11 will be extended. While drawing back the fishing net 10, the fishing tool floating rope 100 will not entangle with the net lines 11.

Therefore, a fishing tool floating rope is disclosed by present invention. Through a creative combination of module stringing core, the floating element 130 and the modular snap fastener 140 can be quickly assembled by the quickly connector 110 to form a string of the module stringing core serving as a center line of circular knitting machine to produce the fishing tool floating rope 100, so that the automated production of covering the floating elements at equal intervals can be achieved during the weaving process of the covering rope. Besides, a plurality of floating elements 130 can be automatically covered insides the floating rope 100 at equal intervals, and a conventional circular knitting machine can be used to produce the fishing tool floating rope 100. The intervals between floating elements 130 can be adjusted and controlled by determined modular snap fastener 140, so it is not necessary to have a special floating rope woven device.

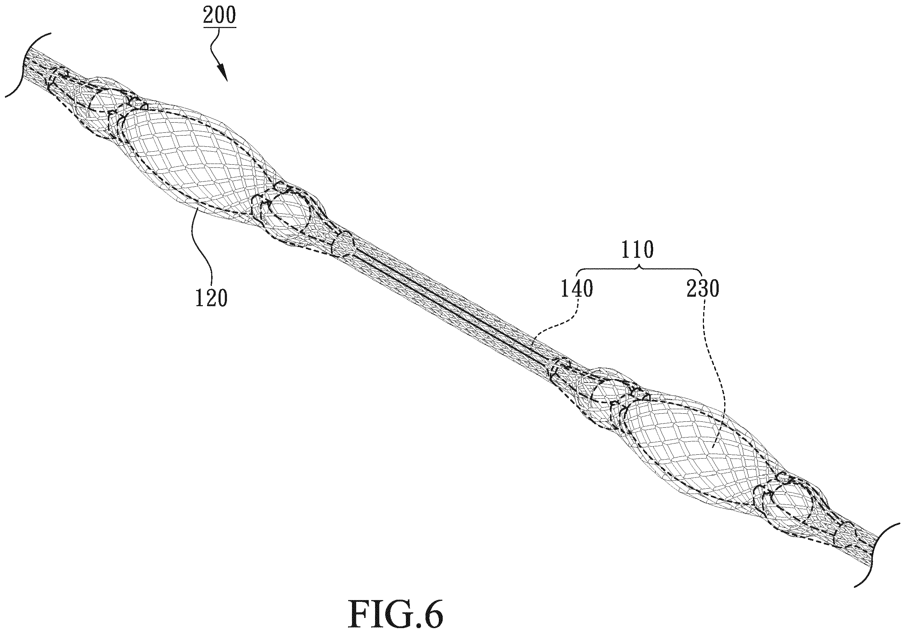

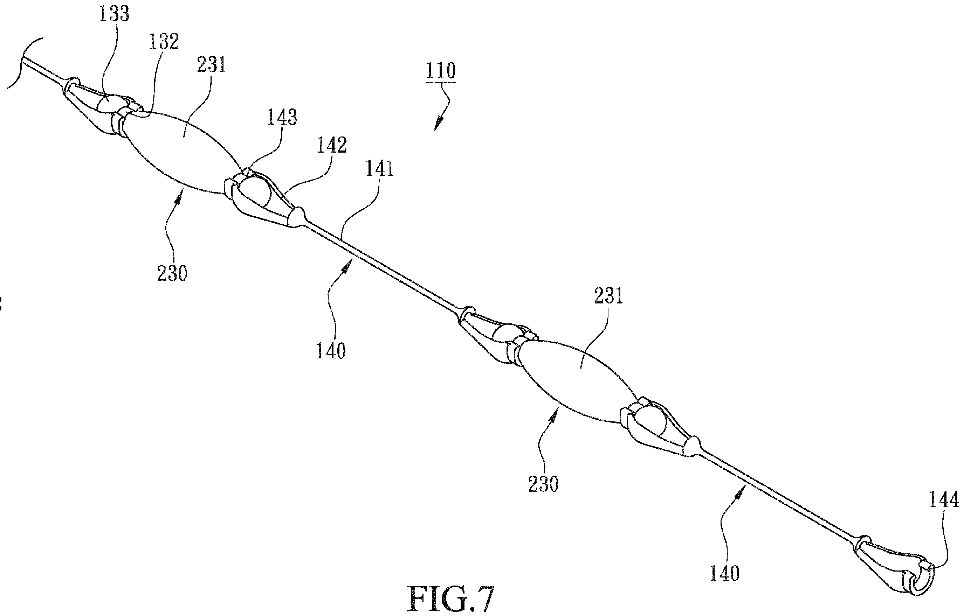

With reference to FIG. 6, a partial exploded view of a fishing tool floating rope 200 in the second preferred embodiment of the present invention is depicted. Elements with the same name and function corresponding to the one in the first preferred embodiment are labeled with the same reference numbers, and so common features are not described again. A fishing tool floating rope 200 comprises a module stringing core 110 and a covering woven rope 120. The covering woven rope 120 is interlaced to cover the module stringing core 110. With reference to FIG. 7, a partial exploded view of the module stringing core 110 is depicted.

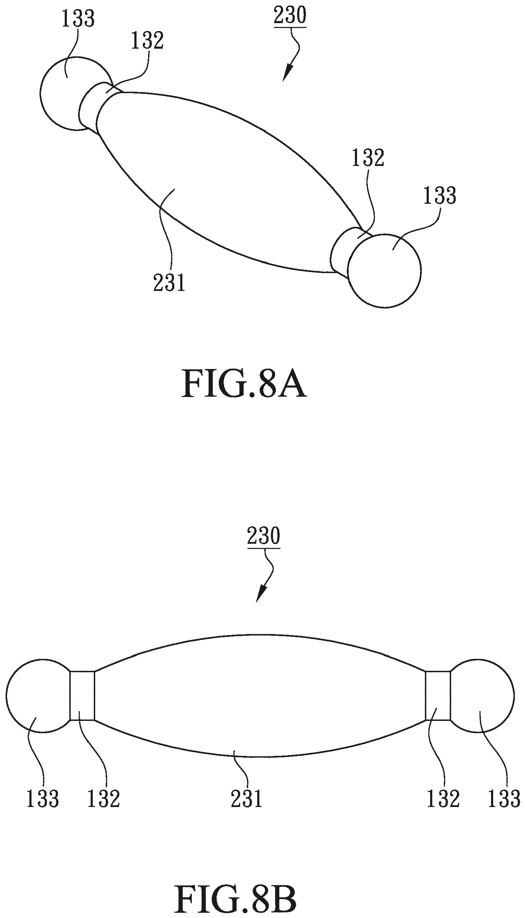

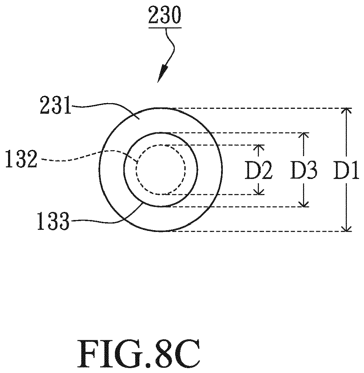

With reference to FIG. 7, the module stringing core 110 is configured to string a plurality of floating elements 230 at equal intervals. With reference to FIG. 8A, 8B and 8C, exploded view, cross-sectional side view and front view of the floating elements 230 are depicted. Each of the floating elements 230 has a main body 231 having two ends connected jointly to a neck portion 132 and a terminal portion 133. The neck portion 132 has a radial cross-sectional size D2 less than the radial cross-sectional size D1 of the main body 231 and radial cross-sectional size D3 of the terminal portion 133 (shown in the FIG. 8C). The floating element 230 can be made from foam material which has density less than water or seawater, so that it can float on the water. With reference to FIG. 8A and 8B, the shape of the main body 231 can be oval, so that the floating elements 230 can help covering woven rope 120 for its covering operation.

With reference to FIG. 7, in the preferred embodiment, the module stringing core 110 further comprises a plurality of modular snap fasteners 140, and each modular snap fastener 140 comprises a bendable line 141 and a plurality of hollow snap fastening members 142 connected to two ends of the bendable line 141 for housing the terminal portions 133. Each of the hollow snap fastening members 142 is comparatively distant from the center of corresponding modular snap fasteners 140 and has a U-shaped gap snap fastening slot 143 configured to fit the neck portion 132. Therefore, the floating elements 230 can string at equal intervals.

Preferably, the shape of the terminal portion 133 is spherical, so when the floating element 230 rotates, the terminal portion 133 will not separate from the corresponding hollow snap fastening member 142. Besides, the radial cross-sectional size D3 of the terminal portion 133 is particularly less than the radial cross-sectional size D1 of the main body 231, so that the radial cross-sectional size of hollow snap fastening members 142 will not protrude over the radial cross-sectional size D1 of the main body 131. Therefore, the terminal portion 133 will not easily separate from the hollow snap fastening member 142.

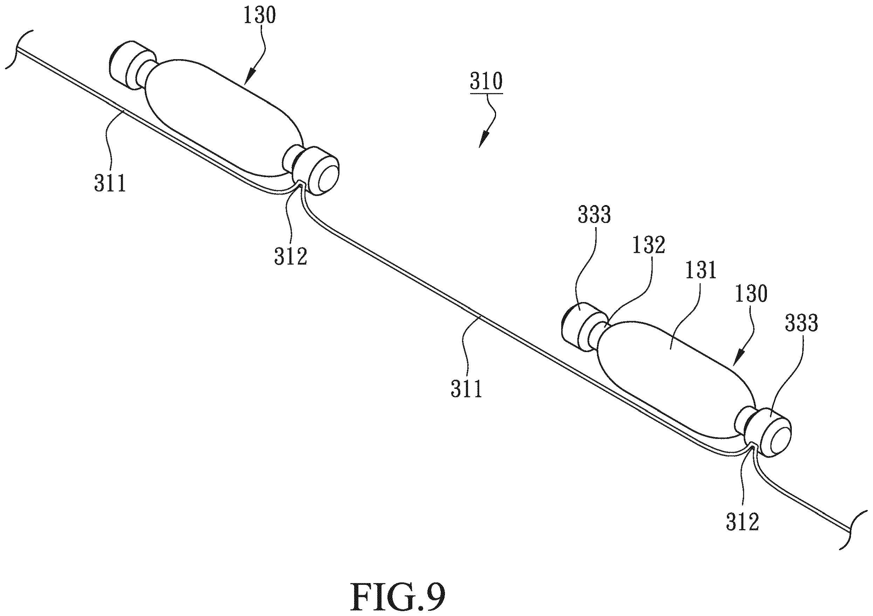

With reference to FIG. 9, a partial exploded view of the module stringing core in a third preferred embodiment according to the present invention is depicted. Elements with the same name and function corresponding to the one in the first preferred embodiment are labeled with the same reference numbers, and so common features are not described again. A fishing tool floating rope comprises a module stringing core 310 and a covering woven rope. Similar to the first preferred embodiment, the covering woven rope is interlaced to cover the module stringing core 310.

With reference to FIG. 9, the module stringing core 310 is configured to string a plurality of floating elements 130 at equal intervals. Each of the floating elements 130 has a main body 131 having two ends connected jointly to a neck portion 132 and a terminal portion 333. The neck portion 132 has a radial cross-sectional size less than the radial cross-sectional sizes of the main body 131 and the terminal portion 333. The shape of the terminal portion 333 is cylindrical, and its length is less than the main body 131.

With reference to FIG. 9, in this preferred embodiment, the module stringing core 310 further comprises a line 311 configured to string a plurality of floating elements 130, so that the floating elements 130 can sting at equal intervals with less cost. The line 311 can be made from synthetic fiber, such as nylon thread.

With reference to FIG. 9, the line 311 can string the terminal portions 333 heading the same stringing direction of the floating elements 130, so that the floating elements 130 can quickly string at equal intervals with less cost. Where the line 311 strings to the floating element 130 is a stringing linking section 312. In a modified embodiment, the floating element 130 can replaced with the floating element 130 with two conical head, and a line directly strings the main body of the floating elements.

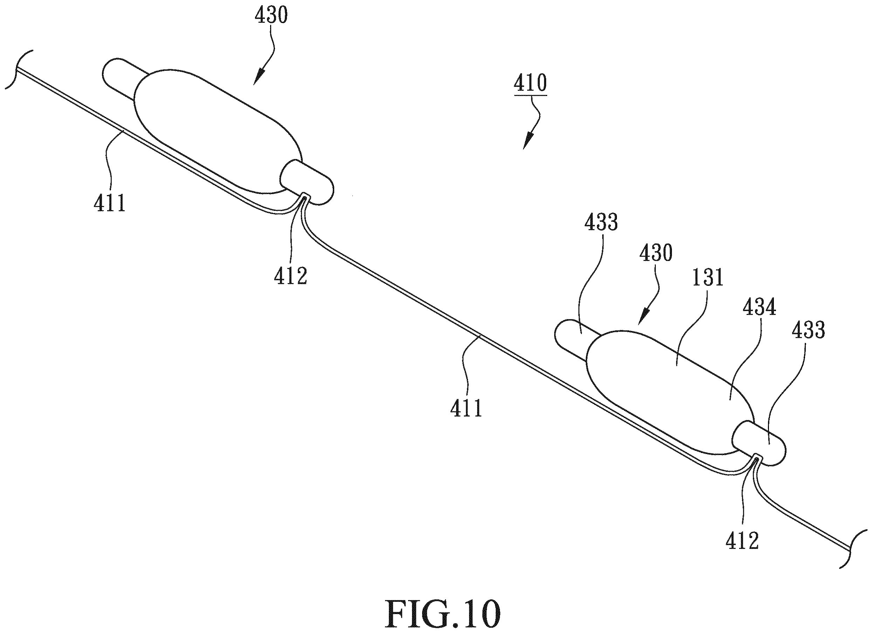

With reference to FIG. 10, a partial exploded view of a fishing tool floating rope in a fourth preferred embodiment of the present invention is depicted. Elements with the same name and function corresponding to the one in the first preferred embodiment are labeled with the same reference numbers, and so common features are not described again. A fishing tool floating rope comprises a module stringing core 410 and a covering woven rope. Similar to the first preferred embodiment, the covering woven rope is interlaced to cover the module stringing core 410.

With reference to FIG. 10, the module stringing core 410 is configured to string a plurality of floating elements 430 at equal intervals. Each of the floating elements 430 has a main body 131 having two ends connected jointly to a terminal portion 433. The terminal portion 433 has a radial cross-sectional size less than the radial cross-sectional size of the main body 131. The shape of the terminal portion 433 is cylindrical, and both its length and diameter are less than the cylindrical main body 131. In this preferred embodiment, the module stringing core 410 further comprises a line 411 configured to string the terminal portions 433 of the floating elements 430, so that the floating elements 430 can sting at equal intervals with less cost. Where the line 411 strings to the floating element 430 is a stringing linking section 412. Preferably, a convergent curved surface 434 formed between the main body 131 and the terminal portion 433 helps the covering woven rope cover the floating elements 430 and enlarge the volume of the floating elements 430.

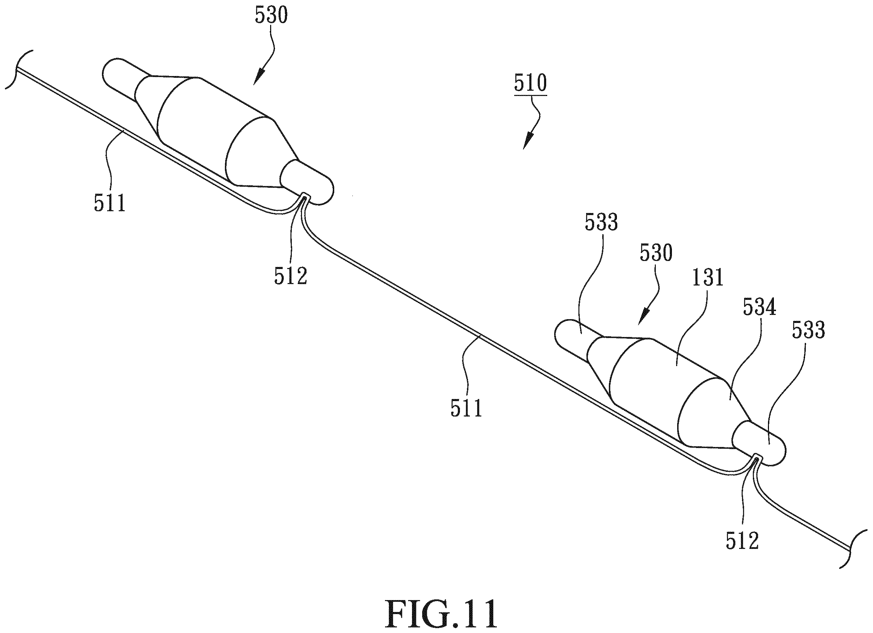

With reference to FIG. 11, a partial exploded view of a fishing tool floating rope in a fifth preferred embodiment of the present invention is depicted. Elements with the same name and function corresponding to the one in the first preferred embodiment are labeled with the same reference numbers, and so common features are not described again. A fishing tool floating rope comprises a module stringing core 510 and a covering woven rope. Similar to the first preferred embodiment, the covering woven rope is interlaced to cover the module stringing core 510.

With reference to FIG. 11, the module stringing core 510 is configured to string a plurality of floating elements 530 at equal intervals. Each of the floating elements 530 has a main body 131 having two ends connected jointly to a terminal portion 533. The terminal portion 533 has a radial cross-sectional size less than the radial cross-sectional size of the main body 131. The shape of the terminal portion 533 is cylindrical, and both its length and diameter are less than the main body 131. In this preferred embodiment, the module stringing core 510 further comprises a line 511 configured to string the terminal portions 533 of the floating elements 530, so that the floating elements 530 can sting at equal intervals with less cost. Where the line 511 strings to the floating element 530 is a stringing linking section 512. Preferably, a convergent tapered surface 534 formed between the main body 131 and the terminal portion 533 helps the covering woven rope cover the floating elements 430 and reduce the damage and deviation of the covering woven rope caused by the main body 131 of the floating element 530.

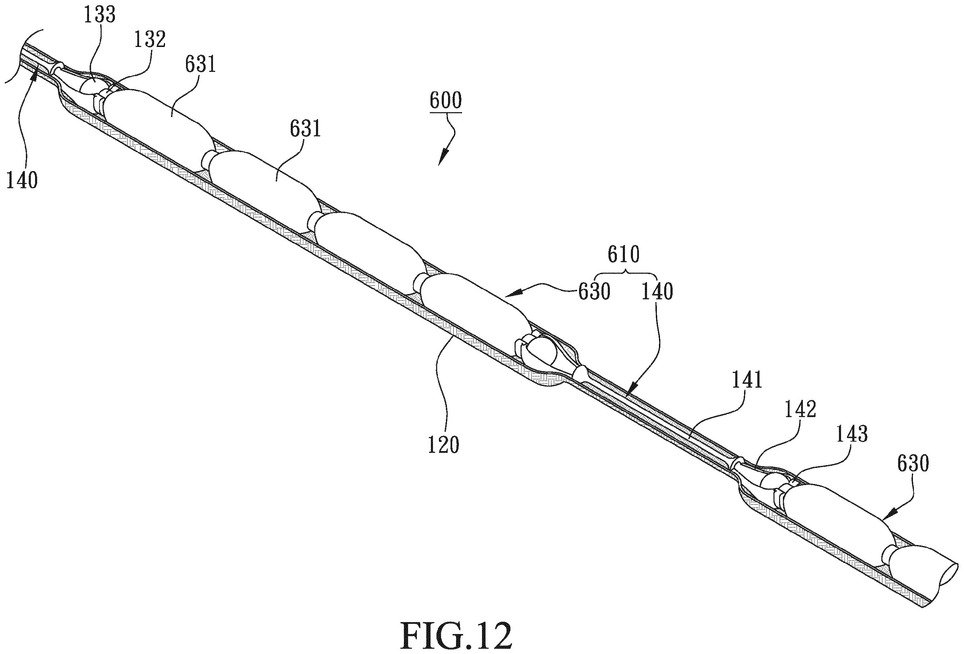

With reference to FIG. 12, a partial exploded view of a fishing tool floating rope 600 in a sixth preferred embodiment of the present invention is depicted. Elements with the same name and function corresponding to the one in the first preferred embodiment are labeled with the same reference numbers, and so common features are not described again.

A fishing tool floating rope 600 comprises a module stringing core 610 and a covering woven rope 120. The covering woven rope is interlaced to cover the module stringing core 610.

With reference to FIG. 12, the module stringing core 610 is configured to string a plurality of floating elements 630 at equal intervals. Each of the floating elements 630 has a main body having two ends connected jointly to a neck portion 132 and a terminal portion 333, wherein at least a main body of floating element 630 is a floating chain which is strung by a plurality of main boy chain unit 631 to enlarge the strong buoyancy section of the fishing tool floating rope 600. The neck portion 132 has a radial cross-sectional size less than radial cross-sectional sizes of the main body chain unit 631 and the terminal portion 133. The stringing relationship of intervals between the adjacent body chain unit 631 and the stringing relationship between the outmost main body chain 631 and the adjacent terminal portions 133 can be classified as connected jointly, line knotting after forming, center line stringing after forming, or mold, hook or snap placed inside the center line while foaming.

With reference to FIG. 12, in this preferred embodiment, the module stringing core 610 preferably further comprises a plurality of modular snap fasteners 140, and each modular snap fastener 140 comprises a bendable line 141 and a plurality of hollow snap fastening members 142 connected to two ends of the bendable line 141 for housing the terminal portions 133. Each of the hollow snap fastening members 142 is comparatively distant from the center of corresponding modular snap fasteners 140 and has a U-shaped gap snap fastening slot 143 configured to fit the neck portion 132. Therefore, the floating elements 630 can string at equal intervals. Furthermore, the shape of the hollow snap fastening members 142 can be droplet-shaped which can provide a better housing effect for the terminal portion 133. The length of the bendable line 141 is preferably larger than the interval between adjacent main body chain unit 631, so that it can provide the weak buoyancy section of the fishing tool floating rope 600.

The foregoing detailed description is merely in relation to a preferred embodiment and shall not be construed as limiting the invention. It is to be understood that many other possible modifications and variations can be made without departing from the scope of the invention defined by the appended claims.

## Claims

1. A fishing tool floating rope (100, 200, 600), comprising:
a module stringing core (110, 310, 410, 510, 610) configured to string a plurality of floating elements (130, 230, 430, 530, 630) at equal intervals, each of the floating elements (130, 230, 430, 530, 630) having a main body (131, 231) having two ends connected each to a neck portion (132) and a terminal portion (133, 333, 433, 533), wherein the neck portion (132) has a radial cross-sectional size less than radial cross-sectional sizes of the main body (131, 231) and the terminal portion (133, 333, 433, 533), and
a covering woven rope (120) interlaced to cover the module stringing core (110, 310, 410, 510, 610),
**characterized in that**
the module stringing core (110, 310, 410, 510, 610) further comprises a plurality of modular snap fasteners (140), each modular snap fastener (140) comprising a bendable line (141) and two hollow snap fastening members (142) connected to two ends of the bendable line (141) for housing the terminal portions (133, 333, 433, 533), and each of the hollow snap fastening members (142) being comparatively distant from the center of corresponding modular snap fasteners (140) and having a U-shaped gap snap fastening slot (143) configured to fit the neck portion (132).

2. The fishing tool floating rope (100, 200, 600) as claimed in claim 1, **characterized in that** the hollow snap fastening members (142) is droplet-shaped.

3. The fishing tool floating rope (600) as claimed in claim 1 or 2, **characterized in that** at least the main body of the floating elements (630) is a floating chain, which is strung by a plurality of main body chain units (631).

4. The fishing tool floating rope (600) as claimed in claim 3, **characterized in that** the length of the bendable line (141) is larger than the interval between the adjacent main body chain units (631).

5. The fishing tool floating rope (100, 200, 600) as claimed in claim 1, **characterized in that** the hollow snap fastening members (142) is semi-covered, and protrusions (144) on two sides of the U-shaped gap snap fastening slot (143) are flexible for clamping.

6. The fishing tool floating rope (100, 200, 600) as claimed in claim 5, **characterized in that** the shape of the terminal portion (133) is spherical.

7. The fishing tool floating rope (100, 200, 600) as claimed in claim 6, **characterized in that** the radial cross-sectional size of the terminal portion (133, 333, 433, 533) is less than the radial cross-sectional size of the main body (131, 231), so that a radial cross-sectional size of the hollow snap fastening members (142) will not protrude over the radial cross-sectional size of the main body (131, 231).

8. The fishing tool floating rope (100, 200, 600) as claimed in claim 5, **characterized in that** the cross section of the hollow snap fastening members (142) is semi-cut and is a tapered edge (145) leaning toward the opening of the U-shaped gap snap fastening slot (143).

9. The fishing tool floating rope (100, 200, 600) as claimed in claim 1 or in any of claims 5-8, **characterized in that** the shape of the main body (131, 231) is cylindrical or oval.

## Patentansprüche

1. Schwimmleine (100, 200, 600) eines Fischfangwerkzeugs, umfassend:
einen Modulaufziehkern (110, 310, 410, 510, 610), der zum Aufziehen einer Mehrzahl Schwimmkörper (130, 230, 430, 530, 630) in gleichen Abständen konfiguriert ist, wobei jeder der Schwimmkörper (130, 230, 430, 530, 630) einen Hauptteil (131, 231) mit zwei Enden aufweist, die jeweils mit einem Halsabschnitt (132) und einem Endabschnitt (133, 333, 433, 533) verbunden sind, wobei der Halsabschnitt (132) einen radialen Querschnitt aufweist, der kleiner ist als die radialen Querschnitte des Hauptteils (131,231) und des Endabschnitts (133, 333, 433, 533), und
ein verwebtes Deckseil (120), das zur Abdeckung des Aufziehkerns (110, 310, 410, 510, 610) verflochten ist, **dadurch gekennzeichnet, dass**
der Aufziehkern (110, 310, 410, 510, 610) eine Mehrzahl modularer Druckknöpfe (140) umfasst, wobei jeder Druckknopf (140) eine biegbare Leine (141) und zwei hohle Schnappverschlusselemente (142) umfasst, die mit zwei Enden der Leine (141) verbunden sind, um die Endabschnitte (133, 333, 433, 533) einzuschließen, und jedes der Schnappverschlusselemente (142) vom Mittelpunkt der entsprechenden Druckknöpfe (140) vergleichsweise weit entfernt ist und einen Schnappverschlussschlitz (143) mit U-förmigem Spalt umfasst, der derart konfiguriert ist, dass er zum Halsabschnitt (132) passt.

2. Schwimmleine (100, 200, 600) nach Anspruch 1, **dadurch gekennzeichnet, dass** die Schnappverschlusselemente (142) tröpfchenförmig sind.

3. Schwimmleine (600) nach Anspruch 1 oder 2, **dadurch gekennzeichnet, dass** mindestens der Hauptteil der Schwimmkörper (630) eine Schwimmkette ist, die von einer Mehrzahl Ketteneinheiten (631) des Hauptteils aufgezogen ist.

4. Schwimmleine (600) nach Anspruch 3, **dadurch gekennzeichnet, dass** die Länge der Leine (141) größer ist als der Abstand zwischen den benachbarten Ketteneinheiten (631).

5. Schwimmleine (100, 200, 600) nach Anspruch 1, **dadurch gekennzeichnet, dass** die Schnappverschlusselemente (142) teilweise abgedeckt sind und Vorsprünge (144) auf zwei Seiten des Schlitzes (143) zwecks Festklemmung flexibel sind.

6. Schwimmleine (100, 200, 600) nach Anspruch 5, **dadurch gekennzeichnet, dass** der Endabschnitt (133) kreisförmig ist.

7. Schwimmleine (100, 200, 600) nach Anspruch 6, **dadurch gekennzeichnet, dass** der radiale Querschnitt des Endabschnitts (133, 333, 433, 533) kleiner ist als der radiale Querschnitt des Hauptteils (131, 231), damit ein radialer Querschnitt der Schnappverschlusselemente (142) über den radialen Querschnitt des Hauptteils (131, 231) nicht hinausragt.

8. Schwimmleine (100, 200, 600) nach Anspruch 5, **dadurch gekennzeichnet, dass** der Querschnitt der Schnappverschlusselemente (142) teilweise geschnitten ist und eine verjüngte Kante (145) ist, die der Öffnung des U-förmigen Spalt-Schnappverschlussschlitzes (143) zugeneigt ist.

9. Schwimmleine (100, 200, 600) nach Anspruch 1 oder nach einem der Ansprüche 5 - 8, **dadurch gekennzeichnet, dass** der Hauptteil (131, 231) zylindrisch oder oval ist.

## Revendications

1. Filin flottant d'outil de pêche (100, 200, 600) comprenant :
une âme de cordage de module (110, 310, 410, 510, 610) configurée pour accrocher une pluralité d'éléments flottants (130, 230, 430, 530, 630) à intervalles égaux, chacun des éléments flottants (130, 230, 430, 530, 630) ayant un corps principal (131, 231) ayant deux extrémités raccordées chacune à une partie de col (132) et à une partie terminale (133, 333, 433, 533), dans lequel la partie de col (132) a une taille transversale radiale inférieure aux tailles transversales radiales du corps principal (131, 231) et de la partie terminale (133, 333, 433, 533) et
un filin tissé de recouvrement (120) entrelacé pour recouvrir l'âme de cordage de module (110, 310, 410, 510, 610),
**caractérisé en ce que** :
l'âme de cordage de module (110, 310, 410, 510, 610) comprend en outre une pluralité de fixations par pression modulaires (140), chaque fixation par pression modulaire (140) comprenant une ligne pliable (141) et deux éléments de fixation par pression creux (142) raccordés aux deux extrémités de la ligne pliable (141) pour loger les parties terminales (133, 333, 433, 533), et chacun des éléments de fixation par pression creux (142) étant relativement à distance du centre des fixations par pression modulaires (140) correspondantes et ayant une fente de fixation par pression à espace en forme de U (143) configurée pour monter la partie de col (132).

2. Filin flottant d'outil de pêche (100, 200, 600) selon la revendication 1, **caractérisé en ce que** les éléments de fixation par pression creux (142) sont en forme de gouttelette.

3. Filin flottant d'outil de pêche (600) selon la revendication 1 ou 2, **caractérisé en ce qu'**au moins le corps principal des éléments flottants (630) est une chaîne flottante, qui est accrochée par une pluralité d'unités de chaîne de corps principal (631).

4. Filin flottant d'outil de pêche (600) selon la revendication 3, **caractérisé en ce que** la longueur de la ligne pliable (141) est supérieure à l'intervalle entre les unités de chaîne de corps principal (631) adjacentes.

5. Filin flottant d'outil de pêche (100, 200, 600) selon la revendication 1, **caractérisé en ce que** les éléments de fixation par pression creux (142) sont à moitié recouverts, et des saillies (144) des deux côtés de la fente de fixation par pression à espace en forme de U (143) sont flexibles pour le serrage.

6. Filin flottant d'outil de pêche (100, 200, 600) selon la revendication 5, **caractérisé en ce que** la forme de la partie terminale (133) est sphérique.

7. Filin flottant d'outil de pêche (100, 200, 600) selon la revendication 6, **caractérisé en ce que** la taille transversale radiale de la partie terminale (133, 333, 433, 533) est inférieure à la taille transversale radiale du corps principal (131, 231) de sorte qu'une taille transversale radiale des éléments de fixation par pression creux (142) ne fait pas saillie sur la taille transversale radiale du corps principal (131, 231).

8. Filin flottant d'outil de pêche (100, 200, 600) selon la revendication 5, **caractérisé en ce que** la section transversale des éléments de fixation par pression creux (142) est à moitié coupée et est un bord progressivement rétréci (145) penché vers l'ouverture de la fente de fixation par pression à espace en forme de U (143).

9. Filin flottant d'outil de pêche (100, 200, 600) selon la revendication 1 ou selon l'une quelconque des revendication 5 à 8, **caractérisé en ce que** la forme du corps principal (131, 231) est cylindrique ou ovale.
